# EUROPEAN PATENT SPECIFICATION

(11) **EP 2 112 607 B1**
(45) Date of publication and mention of the grant of the patent: **25.05.2011**
(21) Application number: 08007980.9
(22) Date of filing: 25.04.2008
(51) Int. Cl.: G06F 17/30

(54) **Method and system for modification of an unlocked record of a database by interacting processes**
Verfahren und System zur Änderung eines entriegelten Datensatzes einer Datenbank anhand von Interaktionsprozessen
Procédé et système de modification d'un fichier déverrouillé dans une base de données par des processus d'interaction

(43) Date of publication of application: 28.10.2009
(73) Proprietor: SIEMENS AKTIENGESELLSCHAFT, 80333 München (DE)
(72) Inventor: Depreter, Frédéric, 7070 Le Roeulx (BE)
(74) Representative: Fischer, Michael

(56) References cited:
- EP-A- 1 039 384
- US-B1- 7 117 481
- BIRMAN K.: "The process group approach to reliable distributed computing" COMMUNICATIONS OF THE ACM, [Online] vol. 36, no. 12, December 1993 (1993-12), XP002493883 Retrieved from the Internet: URL:http://www.cs.cornell.edu/projects/spi nglass/public_pdfs/Process%20Group%20Appro ach.pdf> [retrieved on 2080-08-28]

## Description

The invention relates to a method and system for modification of an unlocked record of a database by interacting processes, especially in a case that the interacting processes are a foreground and a background process.

Commonly used database systems like Oracle® and MS-SQL Server® are based on row-locking, meaning that a record is locked while being used by a process for data transaction. However, the lock is guaranteed only for the time of the transaction. At the end of the transaction, the lock status disappears. Some systems provide a feature to create user locks, however the systems lack the possibility to share a lock between a foreground and a background process. This possibility would be very useful in certain use cases in order to avoid unwanted modifications to a record in the time between the release of the record by the foreground process and the locking of the record by the background process.

Document EP-A-1 039 384 (IBM [US], 2000-9-27) discloses a technique for allowing applications, including an asynchronous locking facility, to update a resource via locking without task suspension or task switching by queuing a request to update a resource requested by a first task onto a lock for the resource; and by operating a second task holding said lock on the resource to execute the request before releasing the lock and performing post processing after the lock is released. For reasons of clarity, the present method is based on the assumption that the record is initially not locked. In case of a locked record, the method is the same, except that a waiting cycle would be entered by a first process described further below, until the record is released.

Features and advantages of the present invention will become more apparent from the following detailed description in conjunction with the following figures and example.

### Example:

It is assumed that a person is requesting a reservation of a seat in a plane, the reservation being transferred to a main system for confirmation of the seat.

The person chooses a vegetarian meal 2a being at a third position in a meal list, the choice being handled by the first process S1, the choice then being submitted 2b by a second process S2 to a catering service.

It is further assumed that an action 3a consists in an update of the choice of meals presented to the person by a process S3.

The abbreviations will be explained further in this document where the figures are explained in detail.

In a use case, it is assumed that the action 3a is carried out immediately after the person has chosen the meal preference.
- Figure 1:: Principle of record modification in a standard database system.
- Figure 2:: Principle of record modification in a case of two interacting processes in a standard data- base system.
- Figure 3:: Record modification in a standard database system applied to the example.
- Figure 4:: Record modification using the present solution applied to the example.
- Figure 5:: Flow chart of record modification using the present solution.

All horizontal arrows in the figures denote a same time base of processes.

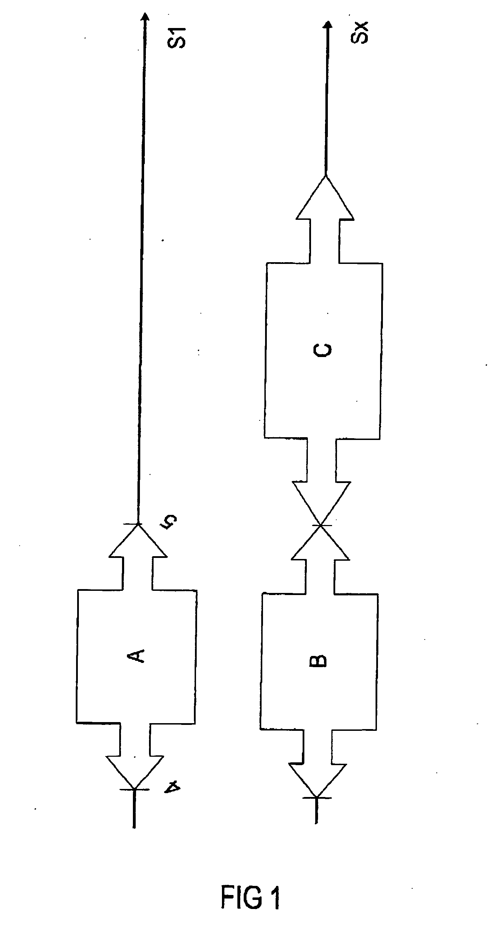

Figure 1 shows the principle of record modification in a standard database system. A record modification A by the process S1 starts with locking 4 the record before the modification A and releasing 5 the record after the modification A. In the timeframe between 4 and 5 no modification B of the record by the process Sx is possible. After releasing 5 the record, the process Sx has access to the record in order to modify it C.

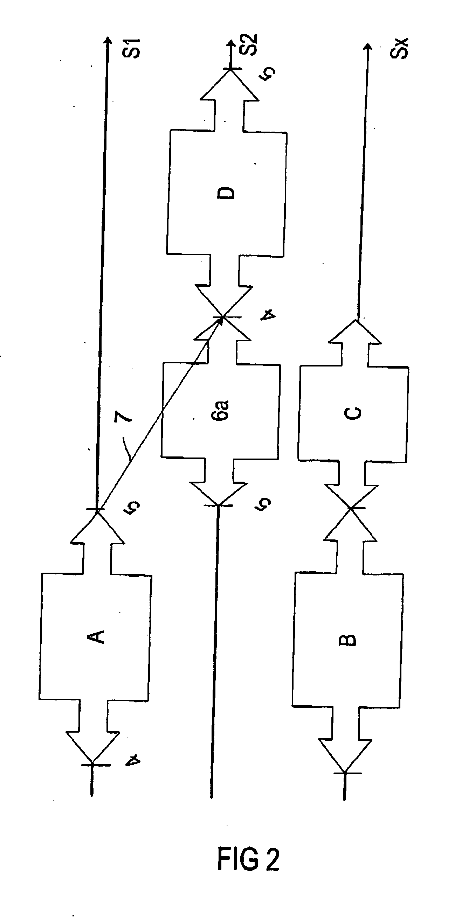

Figure 2 shows the principle of record modification in a case of two interacting processes in a standard database system. A record modification A by the process S1 starts with locking 4 the record before the modification A and releasing 5 the record after the modification A. In the timeframe between 4 and 5 no modification B of the record by the process Sx is possible. After releasing the record, the first process S1 wakes up 7 the second process S2. However, the time until the second process S2 comes to action in order to modify D the record, there is a lock gap 6a of the record. In this period of time, a record modification C by Sx is possible.

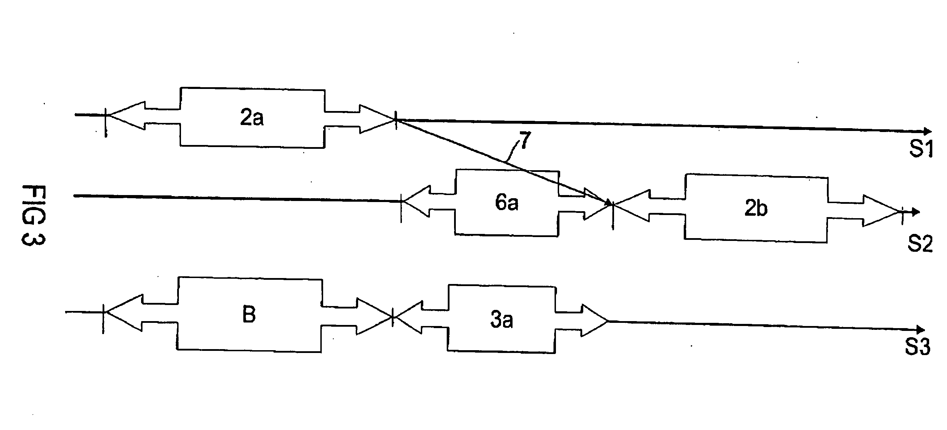

Figure 3 shows a record modification in a standard database system applied to the example. After locking 4 the record of the plane ticket reservation, the first process S1 provides the person with a list of meals to choose from. The person chooses 2a the vegetarian meal which is located at the third position of the meal list. The first process S1 then wakes up 7 the second process S2 after unlocking the record, said second process then submitting 2b the meal choice to the catering service. However, in the lock gap 6a, as previously explained, there is the possibility for the process S3 to change the record. In this case, the process S3 updates 3a the meal list just before the meal choice is submitted to the catering service, causing the third position of the meal list to be a non-vegetarian meal. As soon as the second process S2 fetches the meal choice data of the record, it will submit the third position of the updated meal list and will thus submit a wrong meal choice.

Thus, standard database systems pose a problem consisting in that the update 3a could change the record before 2b has been executed. A workaround in this case would be to perform the actions 2a and 2b in a same session. However, this has the drawback that a transaction associated with the session would take a long time, meaning that the person would not be able to proceed with further actions until 2b has been completed, thus making this approach highly serial. In case many parameters, like in this example the meal choice, have to be decided upon and transferred or further processed, this serial approach can lead to a considerable amount of time spent with waiting until each of the required actions have been completed.

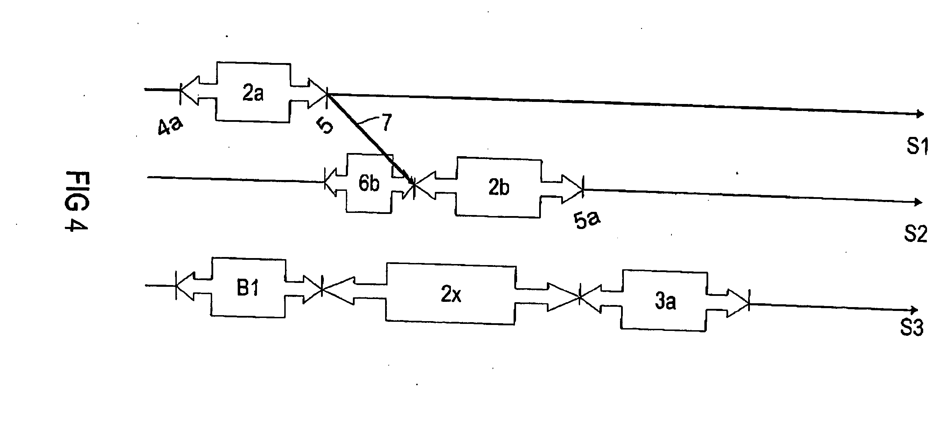

Figure 4 shows, in contrast to figure 3, a record modification using the present solution, applied to the example. The record contains a post-processing flag, which is modified by the first process S1, whereby the first process S1 contains information to identify a necessity to carry out a post-processing action. If this is the case, it sets the flag to a predefined first state and locks the record 4a, the first state being a value of the flag denoting that post-processing of the record is due. Then the first process S1 provides the person with a list of meals to choose from. The person chooses 2a the vegetarian meal which is located at the third position of the meal list. After the person has chosen the vegetarian meal, the first process S1 unlocks the record and wakes up 7 the second process S2 which then submits 2b the meal choice to the catering service. As the record is still marked for post-processing, thus the flag is in the first state, in other words in a state equivalent to a regular database record lock state, the third process S3 has no possibility to modify 2x the record. Thus, the third process S3 has to wait until the second process S2 has submitted 2b the meal choice and set the flag to a second state, thus releasing the record. After that, the third process accesses the record and changes 3a the meal list.

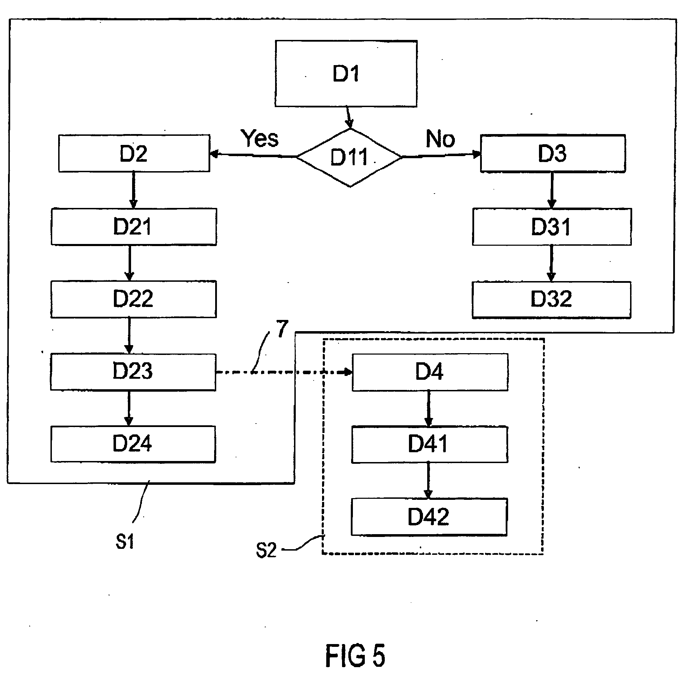

Figure 5 shows a flow chart of record modification using the present solution. The first process S1 locks D1 the record. After that, S1 checks D11 if the post-processing flag is present. In case the flag is present, S1 sets D2 the flag to the first state, performs D21 operations on the record, unlocks D22 the record, wakes up D23 the second process and terminates D24. If no flag is present, S1 simply performs D3 the operations on the record, unlocks D31 the record and terminates D32. The second process S2 performs further modifications on the record D4, sets D41 the flag to the second state and terminates D42.

One goal to be achieved is to provide a solution which guarantees that a record is locked until both the first process (foreground process) S1 and the second process S2 (background process) have terminated a record access.

One way the goal is achieved is by providing a method and system for modification of an unlocked record of a database by interacting processes, whereby,
a) a first process S1 accesses the record and locks D1 it in order to perform operations to the record,
b) the first process S1 checks D11 if the record is marked for post-processing by detecting a presence of a flag in the record,
c) in case the record is not marked for post-processing, thus the presence of the flag is lacking, the first process S1 proceeds to the following actions:
   - performs D3 the operations on the record,
   - unlocks D31 the record and terminates D32;
d) in case the record is marked for post-processing, thus the presence of the flag is detected, the first process S1 performs the following steps:
   - sets D2 the flag to a predefined first state which denotes that post-processing is due, whereby the first state of the flag is equivalent to a lock state of the record, preventing an access to the record by any arbitrary process (Sx) other than the second process (S2),
   - performs D21 the operations to the record and saves them,
   - unlocks D22 the record,
   - calls D23 a second process S2 and terminates D24;
e) in said case that the record is marked for post-processing, the second process S2 performs the following steps:
   - performs D4 further operations to the record and saves them,
   - sets D41 the flag to a predefined second state which denotes that post-processing is done and terminates D42, whereby the second state of the flag is equivalent to an unlocked state of the record, granting access to the record by any arbitrary process (Sx).

The main advantage of the method is the fact that a high degree of security and reliability in database manipulation is achieved. Another advantage is the fact that the possibility to speed up process execution by parallel actions of multiple processes yields a smaller period of time wherein a record is locked, which in turn leads to an overall improved system efficiency.

The first process S1 is a foreground process and the second process S2 is a background process. A typical use case of the present invention is a setup whereby the first process S1 is a foreground process, meaning that it supports user interaction and the second process S2 is a background process, meaning that no user interaction is required but rather necessary tasks like for example internet communication are carried out. However, the use of the method described herein is not limited to a foreground and a background type of process and/or combination thereof. The advantage is that a high degree of parallelism is achieved. In the example, while the second process S2 is transmitting the meal choice, the person can proceed with a further reservation without having to wait until the first reservation has been submitted.

The first state of the flag is equivalent to a lock state of the record, preventing an access to the record by any arbitrary process Sx other than the second process S2 and the second state of the flag is equivalent to an unlocked state of the record, granting access to the record by any arbitrary process Sx. In other words, existing systems are expanded by a double-locking strategy, which further enhances integrity of records especially during transition phases between processes requesting access to the same record.

The second process S2 is granted the access to the record, the record containing the flag set to the first state, by either being called from within the first process S1 or by inheriting access rights to the record by means of interprocess communication (IPC). By being called from within the first process S1, the second process S2 implicitly inherits rights to manipulate the record from the first process S1. Another possibility is a transmission of rights to manipulate the record by the procedure of interprocess communication, meaning that data and calls occur between concurrently running threads of different processes. For example this may include remote procedure calls, known as RPC.

The first process S1 applies a change to the flag based on identifying a necessity of calling the second process S2. A decision of the first process S1 whether the state of the flag has to be changed to the first state is based on information residing in the first process that a second process has to be called. In other words, the first process knows that a background processing has to be carried out, thus, the state of the flag has to be changed. If no other process has to be called from within the first process, the record manipulation is handled in the same way as in a regular database procedure.

A preferred module for implementing the method according to claims 1 to 5 comprises software code, the software code being adapted to be used as a plug-in, the plug-in being importable into database software systems. The module advantageously enhances record manipulation in existing database systems by being loaded as a plug-in, thus, no adaptations have to be carried out to the database system itself.

Another preferred module for implementing the method according to claims 1 to 5 comprises a software library, the software library being adapted to be included into a code base of database software systems. This represents a second alternative of implementing the method described herein. All functions implementing the method described herein are comprised in a library, such as a dynamic link library (d11) or a static linked library (lib) which can be included into an existing database system code. The term code base mentioned above refers to a totality of code implementing the entire functionality of a database system. The code base is recompiled in order to take into account the method, yielding a standalone software package which can be deployed in one piece.

List of Abbreviations
- S1 =: first process
- S2 =: second process
- S3 =: third process
- Sx =: arbitrary process
- A =: record modification by S1
- B =: record modification by Sx impossible(record locked)
- B1 =: record modification by Sx impossible(record locked and flag in first state)
- C =: record modification by Sx possible
- D =: record modification by S2
- 2a =: choose a vegetarian meal
- 2b =: submit meal choice to catering service
- 2x =: record modification by Sx impossible(flag in first state)
- 3a =: update choice of meals
- 4 =: locking record
- 4a =: lock record and set flag to first state
- 5 =: releasing record
- 5a =: set flag to second state
- 6a =: lock.gap
- 6b =: no lock gap
- 7 =: wake up S2
- D1 =: first process locks a record
- D11 =: first process checks if the record is marked for post-processing
- D2 =: first process sets flag to predefined first state
- D21 =: first process performs operation on the record
- D22 =: first process unlocks the record
- D23 =: first process wakes up second process (S2)
- D24 =: first process terminates
- D3 =: second process performs modifications to the record
- D31 =: second process unlocks the record
- D32 =: second process terminates
- D4 =: second process performs further modifications to the record
- D41 =: second process sets the flag to predefined second state
- D42 =: second process terminates

## Claims

1. Method for modification of an unlocked record of a database by interacting processes, whereby,
a) a first process (S1) accesses the record and locks (D1) it in order to perform operations to the record,
b) the first process (S1) checks (D11) if the record is marked for post-processing by detecting a presence of a flag in the record,
c) in case the record is not marked for post-processing, thus the presence of the flag is lacking, the first process (S1) proceeds to the following actions:
- performs (D3) the operations on the record,
- unlocks (D31) the record and terminates (D32);
d) in case the record is marked for post-processing, thus the presence of the flag is detected, the first process (S1) performs the following steps:
- sets (D2) the flag to a predefined first state which denotes that post-processing is due, whereby the first state of the flag is equivalent to a lock state of the record, preventing an access to the record by any arbitrary process (Sx) other than a second process (S2),
- performs (D21) the operations to the record and saves them,
- unlocks (D22) the record,
- calls (D23) the second process (S2) and terminates (D24);
e) in said case that the record is marked for post-processing, the second process (S2) performs the following steps:
- performs (D4) further operations to the record and saves them,
- sets (D41) the flag to a predefined second state which denotes that post-processing is done and terminates (D42), whereby the second state of the flag is equivalent to an unlocked state of the record, granting access to the record by any arbitrary process (Sx).

2. Method according to claim 1, whereby the first process (S1) is a foreground process and the second process (S2) is a background process.

3. Method according to one of the preceding claims, whereby the second process (S2) is granted the access to the record, the record containing the flag set to the first state, by either being called from within the first process (S1) or by inheriting access rights to the record by means of interprocess communication (IPC).

4. Method according to one of the preceding claims, whereby the first process (S1) applies a change to the flag based on identifying a necessity of calling the second process (S2).

5. Module for implementing the method according to claims 1 to 4, comprising software code, the software code being adapted to be used as a plug-in, the plug-in being importable into database software systems.

6. Module for implementing the method according to claims 1 to 4, comprising a software library, the software library being adapted to be included into a code base of database software systems.

## Patentansprüche

1. Verfahren zum Modifizieren eines freigegebenen Datensatzes einer Datenbank durch interagierende Prozesse, wobei
a) ein erster Prozess (S1) auf den Datensatz zugreift und ihn sperrt (D1), um Operationen daran durchzuführen,
b) der erste Prozess (S1) prüft (D11), ob der Datensatz für die Nachbearbeitung markiert ist, indem er das Vorhandensein eines Flags im Datensatz nachweist,
c) der erste Prozess (S1), wenn der Datensatz nicht für die Nachbearbeitung markiert und somit kein Flag vorhanden ist, zu den folgenden Schritten übergeht:
- Ausführen (D3) der Operationen am Datensatz,
- Freigeben (D31) des Datensatzes und Beenden (D32),
d) der erste Prozess (S1), wenn der Datensatz für die Nachbearbeitung markiert und somit ein Flag vorhanden ist, die folgenden Schritte ausführt:
- Setzen (D2) des Flags in einen vorgegebenen ersten Zustand, der angibt, dass eine Nachbearbeitung ansteht, wobei der erste Zustand des Flags einem gesperrten Zustand des Datensatzes entspricht, der Zugriffe durch beliebige andere Prozesse (Sx) als den zweiten Prozess (S2) auf den Datensatz verhindert,
- Ausführen (D21) der Operationen am Datensatz und Speichern,
- Freigeben (D22) des Datensatzes,
- Aufrufen (D23) des zweiten Prozesses (S2) und Beenden (D24),
e) der zweite Prozess (S2), wenn der Datensatz für die Nachbearbeitung markiert ist, die folgenden Schritte ausführt:
- Ausführen (D4) weiterer Operationen am Datensatz und Speichern,
- Setzen (D41) des Flags in einen vorgegebenen zweiten Zustand, der angibt, dass die Nachbearbeitung erfolgt ist, und Beenden (D42), wobei der zweite Zustand des Flags einem freigegebenen Zustand des Datensatzes entspricht, der Zugriffe auf den Datensatz durch beliebige Prozesse (Sx) zulässt.

2. Verfahren nach Anspruch 1, bei dem es sich bei dem ersten Prozess (S1) um einen Vordergrundprozess und bei dem zweiten Prozess (S2) um einen Hintergrundprozess handelt.

3. Verfahren nach einem der vorhergehenden Ansprüche, bei dem dem zweiten Prozess (52) der Zugriff auf den Datensatz gewährt wird, der das in den ersten Zustand gesetzte Flag enthält, indem er entweder aus dem ersten Prozess (S1) heraus aufgerufen wird oder über Interprozesskommunikation (Inter-Process Communication - IPC) Zugriffsrechte für den Datensatz erbt.

4. Verfahren nach einem der vorhergehenden Ansprüche, bei dem der erste Prozess (S1) eine Änderung an dem Flag vornimmt, wenn es sich als notwendig erweist, dass der zweite Prozess (S2) aufgerufen werden muss.

5. Modul zum Implementieren des Verfahrens nach den Ansprüchen 1 bis 4, das Softwarecode umfasst, der so ausgelegt ist, dass er als Plug-in benutzt werden kann, wobei das Plug-in in Datenbank-Softwaresysteme importiert werden kann.

6. Modul zum Implementieren des Verfahrens nach den Ansprüchen 1 bis 4, das eine Software-Bibliothek umfasst, die so ausgelegt ist, dass sie in eine Codebasis von Datenbank-Softwaresystemen inkludiert werden kann.

## Revendications

1. Procédé de modification d'un enregistrement déverrouillé dans une base de données par des processus d'interaction, dans lequel,
a) un premier processus ( S1 ) accède à l'enregistrement et le verrouille (D1) afin d'effectuer des opérations dans l'enregistrement,
b) le premier processus ( S1 ) vérifie ( D11 ) si l'enregistrement est marqué pour un post-traitement en détectant la présence d'un repère dans l'enregistrement,
c) dans le cas où l'enregistrement est marqué pour un post-traitement, la présence du repère étant manquante, le premier processus ( S1 ) procède aux actions suivantes :
- il effectue ( D3 ) les opérations sur l'enregistrement,
- il débloque ( D31 ) l'enregistrement et termine ( D32 ) ;
d) dans le cas où l'enregistrement est marqué pour un post-traitement, la présence du repère étant ainsi détectée, le premier processus ( S1 ) effectue les stades suivants :
- il met ( D2 ) le repère à un premier état défini à l'avance, qui dénote que le post-traitement est dû, dans lequel le premier état du repère est équivalent à un état verrouillé de l'enregistrement empêchant un accès à l'enregistrement par tout processus ( Sx ) arbitraire autre qu'un deuxième processus ( S2 ),
- il effectue ( D21 ) des opérations sur l'enregistrement et les sauvegarde,
- il débloque ( D22 ) l'enregistrement,
- il appelle ( D23 ) le deuxième processus ( S2 ) et termine ( D24 ) ;
e) dans le cas où l'enregistrement est marqué pour un post-traitement, le deuxième processus ( S2 ) effectue les stades suivants :
- il effectue ( D4 ) d'autres opérations pour l'enregistrement et les sauvegarde,
- il met ( D41 ) le repère à un deuxième état défini à l'avance, qui dénote qu'un post-traitement est fait, et termine ( D42 ), le deuxième état du repère étant équivalent à un état déverrouillé de l'enregistrement permettant un accès à l'enregistrement par tout processus ( Sx ) arbitraire.

2. Procédé suivant la revendication 1, dans lequel le premier processus ( S1 ) est un processus d'avant-plan et le deuxième processus ( S2 ) est un processus d'arrière-plan.

3. Procédé suivant l'une des revendications précédentes, dans lequel le deuxième processus ( S2 ) est autorisé à l'accès à l'enregistrement, l'enregistrement contenant le repère est mis au premier état, en étant appelé du sein du premier processus ou en héritant de droit d'accès à l'enregistrement, au moyen d'une communication ( IPC ) interprocessus.

4. Procédé suivant l'une des revendications précédentes, dans lequel le premier processus ( S1 ) implique un changement au repère sur la base de l'identification d'une nécessité d'appeler le deuxième processus ( S2 ).

5. Module pour la mise en oeuvre du procédé suivant les revendications 1 à 4, comprenant un code logiciel, le code logiciel étant conçu pour être utilisé sous une forme manuelle, la forme manuelle pouvant être importée dans des systèmes logiciels de base de données.

6. Module pour la mise en oeuvre du procédé suivant les revendications 1 à 4, comprenant une bibliothèque de logiciel, conçue pour être incluse dans une base de code de systèmes logiciels de base de données.
